# EUROPEAN PATENT SPECIFICATION

(11) **EP 2 094 475 B1**
(45) Date of publication and mention of the grant of the patent: **28.12.2011**
(21) Application number: 06821271.1
(22) Date of filing: 31.10.2006
(51) Int. Cl.: B29D 30/16, B29D 30/30, B29D 30/60

(54) **PROCESS AND APPARATUS FOR BUILDING PNEUMATIC TYRES**
VERFAHREN UND VORRICHTUNG ZUM BAU VON LUFTREIFEN
PROCÉDÉ ET APPAREIL POUR FABRIQUER DES PNEUS

(43) Date of publication of application: 02.09.2009
(73) Proprietor: Pirelli Tyre S.p.A., 20126 Milano (IT)
(72) Inventor: MARCHINI, Maurizio, 20126 Milan (IT); AMURRI, Cesare, 20126 Milan (IT); NOTO, Rodolfo, 20126 Milan (IT); BOSIO, Gian Luigi, 20126 Milan (IT); LO PRESTI, Gaetano, 20126 Milan (IT)
(74) Representative: Brasca, Marco
(86) International application number: PCT/IB2006/054032
(87) International publication number: WO 2008/053278

(56) References cited:
- EP-A2- 0 025 134
- EP-A2- 0 750 985
- DE-A1-102004 037 738
- FR-A1- 2 282 993
- JP-A- 2002 137 310
- US-A- 4 240 863
- US-A- 4 902 372
- US-A1- 2005 183 810

## Description

The present invention relates to a process for building pneumatic tyres and to an apparatus for building pneumatic tyres operating in accordance with said process.

A pneumatic tyre generally comprises a carcass structure including at least one carcass ply having end flaps in engagement with respective annular anchoring structures, each of them usually consisting of at least one substantially circumferential annular insert to which at least one filling insert is applied, which filling insert tapers in a radial direction away from the rotation axis.

Associated with the carcass structure at a radially external position is a belt structure comprising one or more belt layers, disposed in radial superposed relationship relative to each other and to the carcass ply and having textile or metallic reinforcing cords with a crossed orientation and/or substantially parallel to the circumferential extension direction of the tyre.

Applied to the belt structure at a radial external position is a tread band which is also made of elastomeric material as other semifinished products constituting the tyre.

A so-called "under-layer" made of elastomeric material as well, can be interposed between the tread band and belt structure, said under-layer having properties adapted to ensure steady union of the tread band itself.

Respective sidewalls of elastomeric material are further applied to the side surfaces of the carcass structure, each extending from one of the side edges of the tread band as far as close to the respective annular anchoring structure to the beads.

It is to be pointed out to the aims of the present description that by the term "elastomeric material" it is intended a compound comprising at least one elastomeric polymer and at least one reinforcing filler. Preferably, this compound further includes additives such as a cross-linking agent and/or a plasticizer, for example. Due to the presence of the cross-linking agent, this material can be cross-linked through heating, so as to form the final article of manufacture.

In tyres of the tubeless type, the carcass ply is fully coated with a layer of a preferably butyl-based elastomeric material, usually referred to as "liner" which has optimal air-tightness features and extends from one of the beads to the other.

In tyres of the run flat type or for other particular uses, the carcass structure can be also provided with auxiliary supporting inserts of elastomeric material located at an axially internal position to each of the sidewalls. These auxiliary supporting inserts usually referred as "sidewall inserts" are adapted to bear the loads transmitted td the wheel in the event of accidental deflation of the tyre, to enable the vehicle to go on running under safety conditions.

In a great number of known processes for manufacture of a tyre the carcass structure and belt structure as well as the tread band, sidewalls and any other elastomeric structural element, are made separately from each other in respective work stations and then stowed in storage stations or warehouses from which they are subsequently picked up for mutual assembly along a tyre building line.

It is to be noted that in this context by "component of elastomeric material" of the tyre it is meant any part of the tyre made of elastomeric material (tread band, sidewalls, liner, under-liner, fillers in the bead region, sidewall inserts in run flat tyres, abrasion-preventing inserts), or a portion thereof, or yet the assembly formed with two or more of said parts or portions thereof.

More recently, production processes have been also developed in which, such as described in EP 1 279 486, a shaped rubber body is made by extruding a rubber strip using a moving extrusion system comprising a screw extrusion unit, a gear pump and an extrusion head provided with an extruder nozzle that are connected in series. The rubber strip is fed to a rotating support along a substantially straight passage extending from the screw extrusion unit to the extruder nozzle. The rubber strip is also caused to pass through a slot defined between two pressure rollers and applied to an outer surface of the rotating support by one of said pressure rollers.

EP 1 033 236 discloses an apparatus for manufacturing rubber components such as tyre components, which comprises a unit equipped with an extruder to manufacture an unvulcanised rubber ribbon, a winding drum around which the rubber ribbon is wound up to form one of said components, a conveyor to carry the unvulcanized rubber ribbon to the winding drum. The conveyor comprises a conveyor belt passing over rollers and on a side of which the rubber ribbon rests. The conveyor is made up of a section receiving the rubber ribbon, a storage section and a device capable of moving the conveyor belt along an axial direction of the winding drum.

This device is provided with an end roller around which the conveyor belt is wrapped and from which the rubber ribbon is released to the winding drum. A cutting device adapted to cut the rubber ribbon during transport is positioned downstream of the storage section.

Document EP0025134 discloses a tape-applying apparatus comprising an applicator roller. The tape is pulled over the applicator roller and is stitched to a body by stitching rollers. When sufficient tape has been applied, the applicator roller is moved out of contact with the body. A brake apparatus is activated and engages the applicator roller to arrest further feeding of tape to the body. Continued rotation of the body with some of the stitching rollers in contact therewith will stretch the tape between the applicator roller and the stitching rollers until the tape is severed. The free end of the tape is left in position on the applicator roller ready for the next application. Document EP0750985 discloses a tire liner applier and method wherein a die and an anvil shape the ends of the liner at a predetermined section which is transferred to a position adjacent a tire building drum where the section is stretched and the trailing end stitched against the drum. The leading end is clamped and applied to the drum where the next tire is built. The leading end and trailing end are tapered so that they slope away from the drum and provide a smooth transition where the ends contact the drum.

Document US4240863 discloses an elastomer application apparatus including an extrusion rate measuring device for receiving a ribbon of extruded elastomer and for providing a signal representing the rate of extrusion, a drive for moving an article to have the ribbon of extruded elastomer applied thereto in a predetermined path, an applicator for receiving the ribbon and applying the same to the article, a resolver for providing a signal representative of the rate of application, and a control for controlling the speed of the article drive.

In this technical field, the Applicant has felt a need for:
- at least partly improving the quality of the manufactured tyres through laying of a continuous elongated element onto a forming support;
- improving efficiency of the tyre production processes designed to lay said continuous elongated element onto the forming support;
- increasing reliability, speed and versatility of the apparatus for carrying out such production processes.

The Applicant has verified that the tyres obtained through the above described known tyre building methods and apparatus can have geometric and structural faults that, as a result, can adversely affect the end product both in terms of production waste and quality level.

In particular, the Applicant has observed that due to the bulkiness of the pressure rollers described in document EP 1 279 486, the rubber strip cannot be laid with optimal accuracy onto all the regions of the rotating support and even does not at all allow laying of said strip at some points of said support. In fact, there is a limitation in the movements carried out by the pressure rollers around the rotating support due to the requirement of avoiding mechanical interferences between such elements in relative motion.

The Applicant has further verified that, although document EP 1 033 236 uses a conveyor provided with an end roller from which the rubber ribbon is released to the winding drum, with the apparatus disclosed in this document it is not possible to obtain, at the end of the winding operation, a final end of the rubber ribbon capable of avoiding formation of discontinuity on the tyre being formed. In fact, the cutting device adopted in document EP 1 033 236 carries out a sharp cut on the rubber ribbon and once said cut end of the rubber ribbon has been laid onto the winding drum, it gives rise to a step forming and undesirable discontinuity in the tyre rubber component.

The Applicant has further noticed that, at the end of a winding operation, when the length of the rubber ribbon wrapped on the drum is separated from the length coming out of the extruder, the final end of the latter is free and retained on the conveyor belt exclusively due to its adhesion properties. Therefore it may happen that, at the beginning of a new winding cycle, said final end loses its alignment in the feeding direction of the rubber ribbon and is not correctly released towards the winding drum. Therefore the machine must be stopped in order to place the final end of the rubber ribbon again to the right position on the conveyor belt and close to the end roller.

The Applicant has finally observed that the apparatus described in document EP 1 033 236 would be unable to operate in the event that the material forming the rubber ribbon is not of a type adhering to the conveyor belt, since once cutting of said rubber ribbon has occurred, the latter could not be in any manner retained on the conveyor.

The Applicant has found that the above described problems can be overcome by carrying out breaking of a continuous elongated element of elastomeric material, at the end of a winding cycle on a forming support, through stretching and severing of the same continuous elongated element by means of a retaining device.

In more detail, according to a first aspect, the present invention relates to a process as defined in claim 1, for building a pneumatic tyre comprising the steps of assembling components of elastomeric material on a forming support, in which at least one of said components of elastomeric material is manufactured through the steps of:
- feeding a continuous elongated element of elastomeric material to a conveyor;
- applying the continuous elongated element in the form of wound up coils onto the forming support so as to form said at least one component of elastomeric material of the tyre;
wherein the continuous elongated element is moved forward on a moving surface of the conveyor along a predetermined direction, as far as a proximal end of said conveyor close to the forming support;
wherein the forming support is rotated relative to the proximal end of the conveyor to enable application of said continuous elongated element onto said forming support in the form of wound up coils;
wherein, at the end of the application, the continuous elongated element is braked by means of a retaining device co-operating with said conveyor while the forming support goes on rotating with respect to the proximal end of the conveyor, so as to cause stretching and severing of the continuous elongated element.

In accordance with a second aspect, the present invention relates to an apparatus as defined in claim 11, for building pneumatic tyres, comprising:
- at least one forming support;
- at least one assembling device to assemble components of elastomeric material on the forming support; wherein said at least one assembling device comprises:
- at least one feeding unit feeding a continuous elongated element of elastomeric material;
- at least one conveyor for said continuous elongated element having a moving surface along a predetermined direction and towards a proximal end of the conveyor close to the forming support;
- at least one device for application of said continuous elongated element onto said forming support, which application device is positioned at the proximal end of the conveyor;
- devices for rotating said forming support on an axis thereof relative to the proximal end of the conveyor;
- a retaining device co-operating with the conveyor to brake the continuous elongated element at the end of the application. Preferred embodiments of the invention are defined in the dependent claims.

By adopting the process and apparatus according to the invention the Applicant has advantageously obtained tapering of the ends of the continuous elongated element laid on the forming support, so that undesirable discontinuities on the elastomeric component formed on the tyre are eliminated.

Preferably, braking of the continuous elongated element is carried out by a retaining roller facing the moving surface of the conveyor and having a side surface to be brought into contact with the continuous elongated element.

Use of a roller as the retaining device enables reduction in the construction complications of the apparatus and allows the same retaining roller to be used during winding as the guide element for the continuous elongated element of elastomeric material. In fact, during application, the retaining roller rolls on the continuous elongated element.

In addition, preferably, the side surface of the retaining roller has a rounded or convex conformation. The convexity of the side surface generates such slip forces on the continuous elongated element that the latter is maintained on the centre line of the retaining roller.

In addition, advantageously, after severing of the continuous elongated element, the retaining device keeps one end of a length of said continuous elongated element supported by the conveyor.

After severing, the length of the continuous elongated element supported by the conveyor belt that is engaged in the retaining device is therefore now ready for a new application onto the forming support.

According to one procedure, the retaining roller is pressed against the continuous elongated element through a presser element, and braking of the continuous elongated element is carried out by stopping or slowing down the moving surface of the conveyor.

According to an alternative procedure, braking of the continuous elongated element is carried out by stopping or slowing down the moving surface of the conveyor and stopping or slowing down rotation of the retaining rolled.

In accordance with the invention, the conveyor comprises a conveyor belt passing over rollers and having a going stretch defining the moving surface.

Preferably, the conveyor belt is wrapped on a proximal roller located at the proximal end of the conveyor.

Adoption of the conveyor belt is cheap and supplies the continuous elongated element with an even and continuous resting surface.

Preferably, the temperature of the conveyor's moving surface is suitably adjusted to keep the continuous elongated element to a predetermined temperature.

This expedient enables the continuous elongated element to be maintained to the correct temperature so that its physical properties are adapted to ensure correct laying of same onto the forming support.

In addition, preferably the conveyor has a separation or release device to disengage the continuous elongated element from the conveyor itself.

The release device comprises an auxiliary roller mounted close to the proximal end of the conveyor and rotating in the same way as the proximal roller.

The release device further comprises a transmission roller mechanically connected to the proximal roller to receive motion from said proximal roller and in engagement against the auxiliary roller to transmit motion to said auxiliary roller.

If, due to its adhesion properties, a length of the continuous elongated element starts following the curvature of the conveyor belt around the conveyor's proximal roller, intervention of the release device occurs to re-establish the correct path of travel of the continuous elongated element between the conveyor and the forming support. The release device therefore prevents the continuous elongated element from interfering between said proximal roller and the forming support. The action of the release device is particularly useful in the starting step of a new application cycle, during which the free end of the continuous elongated element must be brought from the retaining device up to the forming support.

According to the invention, the conveyor further comprises an idle roller mounted upstream of the retaining device, facing the moving surface of the conveyor and having a side surface to be engaged with the continuous elongated element.

The idle roller enables the continuous elongated element to be retained on the conveyor belt in a more efficient manner and routing of the continuous elongated element to be facilitated when the latter, on coming out of the feeding unit, is to be brought for the first time as far as under the retaining roller.

In addition, preferably, the proximal end of the conveyor can be moved close to or away from the forming support to adjust the conveyor position to the bulkiness of said forming support.

In this way, it is possible to drastically reduce the idling time for change of the support format.

Further features and advantages will become more apparent from the description of a preferred but not exclusive embodiment of a process and an apparatus for building pneumatic tyres, in accordance with the present invention. This description will be set out hereinafter with reference to the accompanying drawings, given by way of non-limiting example, in which:
- Fig. 1 is a diagrammatic top view of a tyre production plant comprising a building apparatus in accordance with the present invention;
- Fig. 2 is a diagrammatic top view of a detail of the plant seen in Fig. 1;
- Fig. 3 is a diagrammatic side view of an assembling device being part of the concerned apparatus;
- Fig. 4 shows a section taken along line III-III in Fig. 3, to an enlarged scale;
- Fig. 5 shows an example in diametrical section of a tyre obtainable in accordance with the present invention.

With reference to the drawings, a plant for tyre production comprising a building apparatus 2 in accordance with the present invention has been generally identified with reference numeral 1.

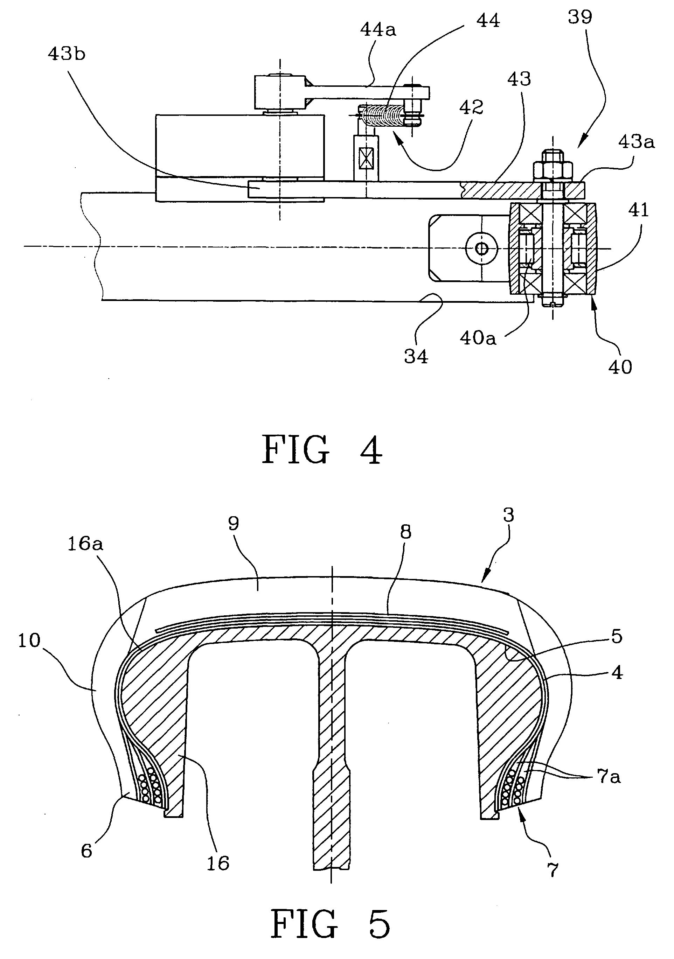

The plant 1 is designed to manufacture pneumatic tyres 3 (Fig. 5) essentially comprising at least one carcass ply 4 preferably internally coated with a layer of airtight elastomeric material, or a so-called liner 5, two so-called "beads" 6 integrating respective annular anchoring structures 7 possibly associated with elastomeric fillers 7a and in engagement with the circumferential edges of the carcass ply 4, a belt structure 8 applied to the carcass ply 4 at a radially external position, a tread band 9 applied to the belt structure 8 at a radially external position, in a so-called crown region of tyre 3, and two sidewalls 10 applied onto the carcass ply 4 at laterally opposite positions, each at a side region of tyre 3, extending from the corresponding bead 6 to the corresponding side edge of the tread band 9.

In run flat tyres or tyres designed for particular uses, auxiliary supporting inserts (not shown), of the type usually referred to as "sidewall inserts" for example, can be also provided; they are applied close to the sidewalls at a position axially internal to the carcass ply 4 or between two paired carcass plies 4, and/or at a position axially external to said at least one carcass ply 4.

The building apparatus 2 may comprise a plurality of building stations 11, 12, 13, 14, 15, each designed, for example, to form one component of the tyre 3 being worked directly on a forming support 16 preferably having a toroidal conformation and the forming surface 16a of which has a shape matching the inner conformation of tyre 3 when building has been completed (Fig. 5). Alternatively, one or more components of the tyre 3 being worked, instead of being directly manufactured on the forming support 16 having a toroidal conformation, may be provided to be obtained as semifinished products coming from preceding working steps and assembled to other components on a forming drum that can have a cylindrical conformation or other shape different from that of the described forming support 16.

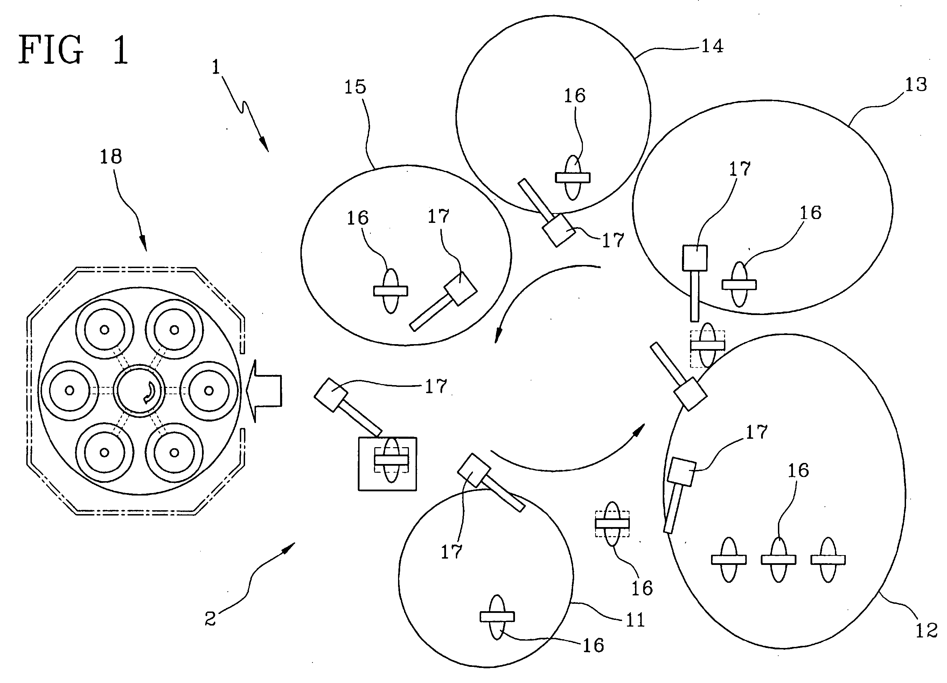

By way of example, shown in Fig. 1 is a first station 11 in which manufacture of liner 5 occurs through winding of a continuous elongated element of elastomeric material into coils disposed close to each other and distributed along the forming surface 16a of the forming support 16 having a toroidal conformation. In at least one second building station 12 manufacture of one or more carcass plies 4 can be carried out, which carcass plies are formed by laying strip-like elements in circumferential side by side relationship onto a forming support 16, said strip-like elements being obtained from a continuous strip of elastomeric material comprising textile or metallic cords disposed in parallel side by side relationship. A third building station 13 can be dedicated to the manufacture of the annular anchoring structures 7 integrated into the beads 6 of tyre 3, through laying of at least one continuous elongated element comprising at least one rubberised textile cord in the form of radially superposed coils. At least one fourth building station 14 can be dedicated to the manufacture of the annular belt structure 8 obtained by laying strip-like elements in circumferential side by side relationship, which strip-like elements are obtained from a continuous strip of elastomeric material comprising mutually parallel and preferably metallic cords and/or by winding up at least one rubberised, preferably metallic, reinforcing cord into coils disposed axially close to each other, in the crown portion of tyre 3. At least one fifth building station 15 can be designed for manufacture of the tread band 9 and sidewalls 10. The tread band 9 and sidewalls 10 are preferably obtained through winding of at least one continuous elongated element of elastomeric material into coils disposed close to each other.

The building stations 11, 12, 13, 14, 15 can each simultaneously operate on a respective tyre 3 under working, carried by a respective forming support 16, sequentially transferred from a building station to the subsequent one, by means of robotized arms 17 or other suitable devices.

The tyres 3 as built by apparatus 2 are sequentially transferred to at least one vulcanisation unit 18 integrated into plant 1.

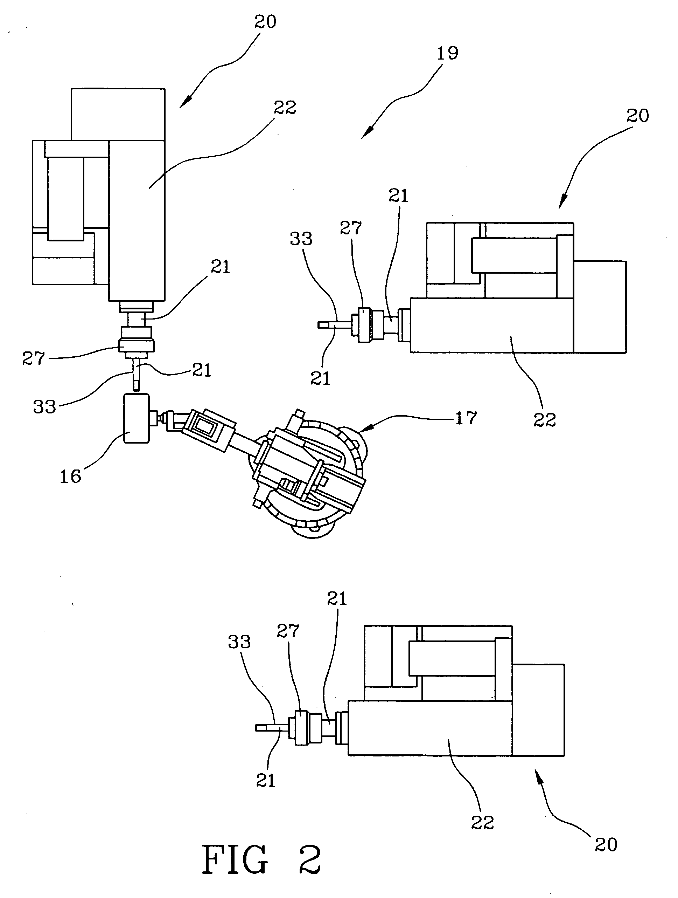

In accordance with the present invention, at least one of the components of elastomeric material in tyre 3, such as the liner 5, fillers 7a and/or other parts of elastomeric material of the beads 6, sidewalls 10, tread band 9, under-belt layer, underlayer of the tread band, abrasion-preventing elements and/or others, is obtained by means of an assembling device generally denoted at 19 (Fig. 2).

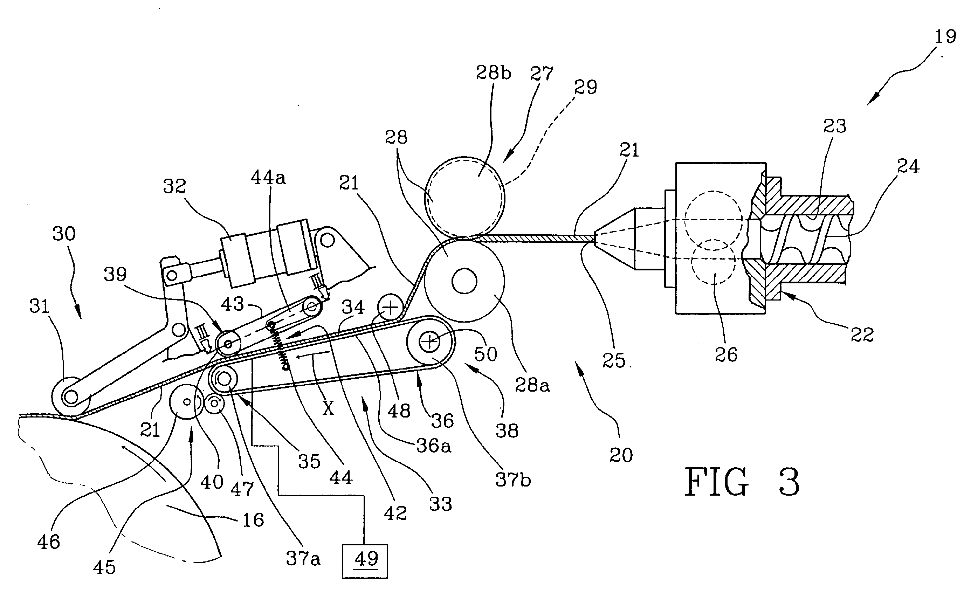

The assembling device 19 comprises at least one feeding unit 20 to supply a continuous elongated element 21 of elastomeric material (Figs. 2 and 3).

In the non-limiting embodiment shown, the feeding unit 20 comprises at least one extruder 22 provided with a cylinder 23 into which elastomeric material is introduced. The cylinder 23, heated to a controlled temperature, included between about 50°C and about 100°C by way of example, operatively houses a rotating screw 24 by effect of which the elastomeric material is urged along the cylinder 23 itself, to an outlet 25 of the extruder 22. If required, the elastomeric material can be conveyed through a positive-displacement pump 26, a gear pump for example, operatively interposed between the rotating screw 24 and the outlet 25, to ensure a more uniform flow rate through the latter.

Consequently, the continuous elongated element 21 of raw elastomeric material fed through the outlet 25 has a substantially circular cross-section outline. Alternatively, the conformation of the outlet 25, and consequently of the cross-section outline of the continuous elongated element 21 can be of the ellipsoidal type. In both said cases, the cross-section area of the outlet 25 is preferably included between about 10 mm² and about 200 mm².

Said size features enable the continuous elongated element 21 to be fed according to a desired linear velocity corresponding to a so-called "target value" of the volume flow rate, included just as an indication between about 1 cm³/s and about 70 cm³/s without too strong deformations being imposed to the elastomeric-material mass at the outlet 25. Thus the elastomeric-material temperature at the outlet 25 can be advantageously maintained to relatively low values for example included between about 80°C and about 110°C. Preferably, the continuous elongated element coming from the extruder 22 is guided to a shaping device 27 comprising at least one pair of counter-rotating shaping rollers 28. A first shaping roller 28a can be of substantially cylindrical conformation, while at least one second shaping roller 28b has at least one circumferential groove 29 of suitable conformation. Thus a shaped clearance is defined between the shaping rollers 28 disposed close to each other, which clearance, in a lying plane thereof containing the rotation axes of said rollers, has an area preferably included between about 50% and about 100% of the area of the outlet 25 of the extruder 22.

An application device 30 operating downstream of the feeding unit 20 carries out application of the continuous elongated element 21 coming from said feeding unit 20, onto the forming support 16 (Fig. 2).

During application, the forming support 16 supported in overhanging by one of said robotized arms 17 for example, is driven in rotation and suitably moved in front of the application device 30 to distribute the continuous elongated element 21 into coils disposed close to each other and/or superposed and wound up around said forming support 16 so as to form a liner 5 for example or any other component of elastomeric material of the tyre 3 being processed.

The application device 30 comprises at least one roller or other applicator member 31 acting in thrust relationship towards the forming support 16, by effect of a pneumatic actuator 32 for example, to apply the continuous elongated element 21 onto the forming support 16 itself.

Operatively disposed between the feeding unit 20 and the application device 30 is a conveyor 33, the function of which is to bring the continuous elongated element 21 coming out of the feeding unit 20 onto the forming support 16 and as far as the application device 30. The applicator member 31 is operatively supported with respect to conveyor 33.

The conveyor 33 has a moving surface 34 which is moved with a continuous motion along a predetermined direction "X", at a linear velocity substantially equal to or slightly higher than the peripheral velocity of the shaping rollers 28 and towards a proximal end 35 of the conveyor 33 close to the forming support 16.

The continuous elongated element 21 is moved forward on the moving surface 34 along the predetermined direction "X" and is guided as far as the proximal end 35 where the application device 30 is located.

In the preferred embodiment herein shown, the conveyor 33 comprises a conveyor belt 36 which is passed over a proximal roller 37a located close to the proximal end 35 of conveyor 33, and over a distal roller 37b located close to a distal end 38 of conveyor 33 opposite to the proximal end 35 and close to the shaping device 27.

In particular, the distal roller 37b is positioned in the vicinity of the first shaping roller 28a and can be driven by the latter by means of a transmission member, not shown, connecting the two rollers together.

The conveyor belt 36 can be defined for example by a toothed rubber belt wrapped on rollers 37a, 37b which have a peripheral toothing, or by a metal belt.

The conveyor belt 36 at the upper part thereof has a going stretch 36a supporting the elongated element 21 and therefore defining the moving surface 34.

The conveyor belt 36 is such driven as to guide the continuous elongated element 21 away from the shaping rollers 28 as far as close to the applicator roller 31.

The conveyor 33 and applicator roller 31 can substantially have the same size in width as the continuous elongated element 21, so that movement of the forming support 16 is not hindered by the robotized arm 17 during laying of the continuous elongated element 21.

A retaining device 39 is disposed on the proximal end 35 of conveyor 33, close to the applicator roller 31. The retaining device 39 co-operates with the conveyor 33 and is designed to sever the continuous elongated element 21 at the end of one application step of said element 21 onto the forming support 16.

Severing is carried out by braking the continuous elongated element 21 while the forming support 16 goes on rotating relative to the proximal end 35 of conveyor 33, until causing stretching of the continuous elongated element 21 and said severing.

To this aim, the speed of the moving surface 34 of conveyor 33 is slowed down and/or said moving surface is stopped while simultaneously activating the retaining device 39.

In accordance with a preferred embodiment herein shown, the retaining device 39 comprises a retaining roller 40 mounted over the moving surface 34 of conveyor 33 and facing said moving surface 34 (Figs. 3 and 4).

The retaining roller 40 has a substantially cylindrical side surface 41 adapted to engage the continuous elongated element 21.

Preferably, the retaining roller 40 is pushed towards the moving surface 34 of conveyor 33 and pressed against the continuous elongated element 21 by means of a presser element 42, of the elastic type for example.

In the embodiment shown, the presser element 42 comprises a supporting arm 43 having a first end 43a carrying the retaining roller 40 and a second end 43b hinged on a frame, not shown, integral with conveyor 33. A spring 44 is secured to the frame and the arm 43, by a lever 44a for example, to hold the retaining roller 40 against the continuous elongated element 21.

The retaining roller 40 is mounted on a one-way clutch 40a enabling the roller 40 to freely rotate in one way only, this way being opposite to the rotation direction of the proximal roller 37a. In this manner, a portion of the side surface 41 of the retaining roller 40 brought into contact with the continuous elongated element 21 has a peripheral linear displacement in the same direction as the movement of the conveyor belt 36 and the continuous elongated element 21.

In addition, preferably, the side surface of the retaining roller 40 has a convex conformation, i.e. it is in the form of a barrel, to generate slip forces on the continuous elongated element 21 capable of maintaining the latter on the centre line of the retaining roller 40 (Fig. 4).

In use, during laying of the continuous elongated element 21 on the forming support 16, the retaining roller 40 exerts pressure against, and rolls on said continuous elongated element 21.

To sever said continuous elongated element 21 at the end of laying it is sufficient to slow down and/or stop the conveyor belt 36. Due to pressure exerted by the retaining roller 40 that at all events goes on rolling on the continuous elongated element 21, and to the traction generated by the forming support 16 going on rotating, stretching and severing of the continuous elongated element 21 are caused at a region close to the retaining roller 40 and located downstream of the latter.

As a result of the above, the ends of the elongated element 21 laid on the forming support 16 appear to be advantageously tapered, so as to eliminate undesirable discontinuities on the elastomeric component formed on tyre 3.

Immediately after severing, the one-way clutch of the retaining roller 40 avoids that springing back of the length of the continuous elongated element 21 retained by the retaining roller 40 and disposed downstream of the latter may cause rotation of said retaining roller 40 in the opposite way relative to the application direction and slipping away of the continuous elongated element 21 from below the retaining roller 40.

Therefore, after severing of the continuous elongated element 21, the retaining device 39 holds one end of a length of said continuous elongated element 21 supported by conveyor 33. The continuous elongated element 21 is therefore ready for a new application onto the forming support 16.

According to an alternative embodiment, the retaining roller 40 may further be provided with a brake capable of slowing down and/or stopping rotation of the roller 40 itself concurrently with slowing down and/or stopping of the conveyor belt 36. Under this situation, the presence of the one-way clutch is not strictly necessary. The function of the retaining roller 40 therefore is not only to exert pressure but it also carries out an active pulling action on the continuous elongated element 21.

The conveyor 33 further has a release device 45 adapted to disengage the continuous elongated element 21 from the proximal end 35 of the conveyor 33 if said continuous elongated element 21 starts following the curvature of the conveyor belt 36 around the proximal roller 37a, due to partial adhesion between said conveyor belt 36 and the continuous elongated element 21.

The action of the release device 45 is particularly useful during the starting step of a new application cycle, when the free end of the continuous elongated element 21 retained by the retaining device 39 must be brought onto the forming support 16.

Preferably, the release device 45 comprises an auxiliary roller 46 mounted adjacent to the proximal end 35 of the conveyor belt 33 and rotating in the same way as the proximal roller 37a.

During application, the auxiliary roller 46 remains positioned on the same side as the proximal roller 37a relative to the continuous elongated element 21 extending between the conveyor 33 and the application device 30. A portion of the side surface of the auxiliary roller 46 facing the continuous elongated element 21 therefore moves away from the conveyor belt 36.

Preferably, the auxiliary roller 46 is moved by the proximal roller 37a. In particular, a transmission roller 47 is mechanically connected to the proximal roller 37a, receives motion from said proximal roller 37a and rotates in the opposite direction relative to the latter.

The transmission roller 47 is engaged against the auxiliary roller 46 and transmits motion to said auxiliary roller 46 which therefore rotates in the same way as the proximal roller 37a.

The conveyor 33 further comprises an idle roller 48 mounted upstream of the retaining device 39. The idle roller 48 faces the moving surface 34 of conveyor 33 and has a side surface thereof susceptible of engagement with the continuous elongated element 21.

Preferably, the idle roller 48 is pushed towards the moving surface 34 of conveyor 33 and pressed against the continuous elongated element 21 through a pressure element, not shown, that can be similar to the pressure element 42 acting on the retaining roller 40. Preferably, in addition, the side surface of the idle roller 48 too is of convex conformation, i.e. it is barrel-shaped, to generate slip forces on the continuous elongated element 21 capable of maintaining the same on the centre line of the idle roller 48.

In the embodiment shown, the idle roller 48 is positioned immediately downstream of the shaping rollers 28, so as to guide the continuous elongated element 21 on the conveyor belt 36 and to keep the continuous elongated element 21 in contact with said conveyor belt 36 as far as the proximal end 37a is reached.

The conveyor 33 further comprises a unit 49 (only diagrammatically shown) for adjusting the temperature of the moving surface 34 of conveyor 33.

This unit 49 is adapted to keep the continuous elongated element 21 disposed on the moving surface 34 to a predetermined and correct temperature, preferably included between about 80°C and about 100°C, so that said element 21 has such physical properties that correct laying on the forming support 16 is ensured as well as correct formation of the component of elastomeric material.

In addition and preferably, the proximal end 35 of conveyor 33 is movable close to or away from the forming support 16, to adapt the position of conveyor 33 to the bulkiness of said forming support 16. Therefore displacement of the proximal end 35 of conveyor 33 is carried out when the diameter of the forming support 16 is changed.

In the preferred embodiment herein shown, the conveyor 33 can be rotated about an axis 50, concentric with the distal roller 37b for example, so as to always position the proximal end 35 of the conveyor 33 itself and the application device 30 in the vicinity of the forming support 16, irrespective of the diameter of said forming support.

## Claims

1. A process for building a pneumatic tyre (3) comprising the steps of assembling components of elastomeric material on a forming support (16), in which at least one of said components of elastomeric material is manufactured through the steps of:
- feeding a continuous elongated element (21) of elastomeric material to a conveyor (33) ; wherein the conveyor (33) comprises a conveyor belt (36) having a going stretch (36a) defining a moving surface (34);
- applying the continuous elongated element (21) in the form of wound up coils onto the forming support (16) so as to form said at least one component of elastomeric material of the tyre (3);
wherein the continuous elongated element (21) is moved forward on the going stretch (36a) of the conveyor belt (36) along a predetermined direction (X), as far as a proximal end (35) of said conveyor (33) close to the forming support (16) ;
wherein the forming support (16) is rotated relative to the proximal end (35) of the conveyor (33) to enable application of said continuous elongated element (21) onto said forming support (16) in the form of wound up coils;
wherein, at the end of the application, the continuous elongated element (21) is braked by means of a retaining device (39) co-operating with said conveyor (33) while the forming support (16) goes on rotating with respect to the proximal end (35) of the conveyor (33), so as to cause stretching and severing of the continuous elongated element (21);
wherein the continuous elongated element (21) is engaged with a side surface of an idle roller (48) mounted upstream of the retaining device (39); **characterized in that** said idle roller (48) faces the going stretch (36a) of the conveyor belt (36), to guide the continuous elongated element (21) on the conveyor belt (36) and to keep said continuous elongated element (21) in contact with said conveyor belt (36) as far as the proximal end (35) is reached.

2. A process as claimed in claim 1, wherein braking of the continuous elongated element (21) is carried out by a retaining roller (40) facing the moving surface (34) of the conveyor (33) and having a side surface (41) brought into contact with the continuous elongated element (21).

3. A process as claimed in claim 2, wherein the retaining roller (40) is pressed against the continuous elongated element (21) by a pressure element (42).

4. A process as claimed in claim 1, 2 or 3, wherein braking of the continuous elongated element (21) is carried out by stopping the moving surface (34) of the conveyor (33).

5. A process as claimed in claim 1, 2 or 3, wherein braking of the continuous elongated element (21) is carried out by slowing down the speed of the moving surface (34) of the conveyor (33).

6. A process as claimed in claim 1, 2 or 3, wherein braking of the continuous elongated element (21) is carried out by stopping the moving surface (34) of the conveyor (33) and stopping rotation of the retaining roller (40).

7. A process as claimed in claim 1, 2 or 3, wherein braking of the continuous elongated element (21) is carried out by slowing down the speed of the moving surface (34) of the conveyor (33) and slowing down the speed of the retaining roller (40).

8. A process as claimed in claim 2, wherein, during application, the retaining roller (40) rolls on the continuous elongated element (21).

9. A process as claimed in claim 1, wherein, after severing of the continuous elongated element (21), the retaining device (39) keeps one end of a length of said continuous elongated element (21) supported by the conveyor (33).

10. A process as claimed in claim 1, wherein the temperature of the moving surface (34) of the conveyor (33) is adjusted in order to keep the continuous elongated element (21) to a predetermined temperature.

11. An apparatus for building pneumatic tyres, comprising:
- at least one forming support (16);
- at least one assembling device (19) to assemble components of elastomeric material on the forming support (16);
wherein said at least one assembling device (19) comprises:
- at least one feeding unit (20) feeding a continuous elongated element (21) of elastomeric material;
- at least one conveyor (33) for said continuous elongated element (21) having a moving surface (34) along a predetermined direction (X) and towards a proximal end (35) of the conveyor (33) close to the forming support (16);
wherein the conveyor (33) comprises a conveyor belt (36) having a going stretch (36a) defining the moving surface (34);
- at least one device (30) for application of said continuous elongated element (21) onto said forming support (16), which application device is positioned at the proximal end (35) of the conveyor (33);
- devices for rotating said forming support (16) on an axis thereof with respect to the proximal end (35) of the conveyor (33);
- a retaining device (39) co-operating with the conveyor (33) to brake the continuous elongated element (21) at the end of the application;
an idle roller (48) mounted upstream of the retaining device (39), wherein
said idle roller (43) faces the going stretch (36a) of the conveyor belt (36) faces the side surface to be engaged with the continuous elongated element (21).

12. An apparatus as claimed in claim 11, wherein the retaining device (39) comprises a retaining roller (40) facing the moving surface (34) of the conveyor (33) and having a side surface (41) susceptible of engagement with the continuous elongated element (21).

13. An apparatus as claimed in claim 12, wherein the retaining device (39) further comprises a pressure element (42) operatively active on the retaining roller (40), to press said retaining roller (40) against the continuous elongated element (21).

14. An apparatus as claimed in claim 11, wherein the conveyor (33) further has a release device (45) to disengage the continuous elongated element (21) from said conveyor (33).

15. An apparatus as claimed in claim 11, wherein the conveyor (33) further comprises a unit (49) for adjusting the temperature of the moving surface (34) of the conveyor (33), to keep the continuous elongated element (21) disposed on said moving surface (21) to a predetermined temperature.

16. An apparatus as claimed in claim 11, wherein the proximal end (35) of the conveyor (33) is movable close to or away from the forming support (16), to adapt the position of the conveyor (33) to the bulkiness of said forming support (16).

17. An apparatus as claimed in claim 11, wherein said at least one application device (30) comprises at least one applicator member (31) operatively supported relative to the conveyor (33) and acting in thrust relationship towards the forming support (16).

18. An apparatus as claimed in claim 11, wherein said at least one feeding unit (20) comprises at least one extruder (22) to deliver the continuous elongated element (21) of elastomeric material.

19. An apparatus as claimed in claim 18, wherein said at least one feeding unit (20) comprises at least one device (27) for shaping the continuous elongated element (21) coming from the extruder (22), consisting of at least one pair of counter-rotating shaping rollers (28) engaging the continuous elongated element (21).

20. An apparatus as claimed in claim 19, wherein the conveyor belt (36) is wrapped on a distal roller (37b) located close to a distal end (38) of the conveyor (33) opposite to the proximal end (35) and adjacent to the shaping device (27).

21. An apparatus as claimed in claim 20, wherein the distal roller (37b) is mechanically connected to one of the shaping rollers (28a) to receive motion from said shaping roller (28a).

## Patentansprüche

1. Verfahren zum Herstellen eines Luftreifens (3) mit den Schritten des Anordnens von Komponenten aus Elastomermaterial auf einem Formungslager (16), wobei wenigstens eine der Komponenten aus Elastomermaterial durch folgende Schritte hergestellt wird:
- das Zuführen eines kontinuierlichen länglichen Elements (21) aus Elastomermaterial zu einem Förderer (33), wobei der Förderer (33) ein Förderband (36) mit einem Lauftrum (36a) aufweist, der eine Bewegungsoberfläche (34) definiert,
- das Aufbringen des kontinuierlichen länglichen Elements (21) in der Form von gewundenen Spiralen auf das Formungslager (16), um somit wenigstens eine Komponente aus Elastomermaterial des Reifens (3) zu formen,
wobei das kontinuierliche längliche Element (21) auf dem Lauftrum (36a) des Förderbands (36) entlang einer vorher festgelegten Richtung (X) bis zu einem fern gelegenen Ende (35) des Förderers (33) nahe an dem Formungslager (16) bewegt wird,
wobei das Formungslager (16) bezüglich des nahe gelegenen Endes (35) des Förderers (33) gedreht wird, um das Aufbringen des kontinuierlichen länglichen Elements (21) auf das Formungslager (16) in der Form von gewundenen Spiralen zu ermöglichen,
wobei am Ende des Aufbringens das kontinuierliche längliche Element (21) durch eine Rückhalteeinrichtung (39) abgebremst wird, die mit dem Förderer (33) zusammenwirkt während sich das Formungslager (16) weiter in Bezug auf das nahe gelegene Ende (35) des Förderers (33) dreht, um somit eine Dehnung und ein Zerteilen des kontinuierlichen länglichen Elements (21) zu verursachen,
wobei das kontinuierliche längliche Element (21) mit einer Seitenoberfläche einer Leerlaufrolle (48), die der Rückhalteeinrichtung (39) vorgelagert angebracht ist, im Eingriff steht,
**dadurch gekennzeichnet, dass** die Leerlaufrolle (48) dem Lauftrum (36a) des Förderbands (36) gegenüberliegt, um das kontinuierliche längliche Element (21) auf dem Förderband (36) zu führen und um das kontinuierliche längliche Element (21) in Kontakt mit dem Förderband (36) zu halten, bis das nahe gelegene Ende (35) erreicht wird.

2. Verfahren nach Anspruch 1, bei dem das Bremsen des kontinuierlichen länglichen Elements (21) durch eine Rückhalterolle (40) ausgeführt wird, die der Bewegungsoberfläche (34) des Förderers (33) gegenüberliegt und die eine Seitenoberfläche (41) aufweist, die in Kontakt mit dem kontinuierlichen länglichen Element (21) gebracht ist.

3. Verfahren nach Anspruch 2, bei dem die Rückhalterolle (40) gegen das kontinuierliche längliche Element (21) durch ein Drückelement (42) gedrückt wird.

4. Verfahren nach Anspruch 1, 2 oder 3, bei dem das Bremsen des kontinuierlichen länglichen Elements (21) durch Anhalten der Bewegungsoberfläche (34) des Förderers (33) ausgeführt wird.

5. Verfahren nach Anspruch 1, 2 oder 3, bei dem das Bremsen des kontinuierlichen länglichen Elements (21) durch Verlangsamen der Geschwindigkeit der Bewegungsoberfläche (34) des Förderers (33) ausgeführt wird.

6. Verfahren nach Anspruch 1, 2 oder 3, bei dem das Bremsen des kontinuierlichen länglichen Elements (21) durch Anhalten der Bewegungsoberfläche (34) des Förderers (33) und durch Anhalten der Drehung der Rückhalterolle (40) ausgeführt wird.

7. Verfahren nach Anspruch 1, 2 oder 3, bei dem das Bremsen des kontinuierlichen länglichen Elements (21) durch Verlangsamen der Geschwindigkeit der Bewegungsoberfläche (34) des Förderers (33) und durch Verlangsamen der Geschwindigkeit der Rückhalterolle (40) ausgeführt wird.

8. Verfahren nach Anspruch 2, bei dem während des Aufbringens die Rückhalterolle (40) auf dem kontinuierlichen länglichen Element (21) rollt.

9. Verfahren nach Anspruch 1, bei dem nach dem Zerteilen des kontinuierlichen länglichen Elements (21) die Rückhalteeinrichtung (39) ein Ende einer Länge des kontinuierlichen länglichen Elements (21) durch den Förderer (33) abgestützt hält.

10. Verfahren nach Anspruch 1, bei dem die Temperatur der Bewegungsoberfläche (34) des Förderers (33) angepasst wird, um das kontinuierliche längliche Element (21) bei einer vorher festgelegten Temperatur zu halten.

11. Vorrichtung zum Herstellen von Luftreifen mit:
- wenigstens einem Formungslager (16),
- wenigstens einer Anordnungseinrichtung (19), um Komponenten aus Elastomermaterial auf dem Formungslager (16) anzuordnen,
wobei die wenigstens eine Anordnungseinrichtung (19) aufweist:
- wenigstens eine Zuführeinheit (20), die ein kontinuierliches längliches Element (21) aus Elastomermaterial zuführt,
- wenigstens einen Förderer (33) für das kontinuierliche längliche Element (21) mit einer Bewegungsoberfläche (34) entlang einer vorher festgelegten Richtung (X) und zu einem nahe gelegenen Ende (35) des Förderers (33) nahe an dem Formungslager (16) hin,
wobei der Förderer (33) ein Förderband (36) mit einem Lauftrum (36a), der die Bewegungsoberfläche (34) definiert, aufweist,
- wenigstens eine Einrichtung (30) zum Aufbringen des kontinuierlichen länglichen Elements (21) auf das Formungslager (16), wobei die Aufbringeinrichtung an dem nahe gelegenen Ende (35) des Förderers (33) positioniert ist,
- Einrichtungen zum Drehen des Formungslagers (16) um eine von dessen Achsen in Bezug auf das nahe gelegene Ende (35) des Förderers (33),
- eine Rückhalteeinrichtung (39), die mit dem Förderer (33) zusammenwirkt, um das kontinuierliche längliche Element (21) am Ende des Aufbringens abzubremsen,
- eine Leerlaufrolle (48), die der Rückhalteeinrichtung (39) vorgelagert angebracht ist, wobei
die Leerlaufrolle (48) dem Lauftrum (36a) des Förderbands (36) gegenüberliegt und eine Seitenoberfläche aufweist, die mit dem kontinuierlichen länglichen Element (21) in Eingriff zu bringen ist.

12. Vorrichtung nach Anspruch 11, bei der die Rückhalteeinrichtung (39) eine Rückhalterolle (40) aufweist, die der Bewegungsoberfläche (34) des Förderers (33) gegenüberliegt und die eine Seitenoberfläche (41) aufweist, die mit dem kontinuierlichen länglichen Element (21) in Eingriff gebracht werden kann.

13. Vorrichtung nach Anspruch 12, bei der die Rückhalteeinrichtung (39) ferner ein Drückelement (42) aufweist, das operativ auf der Rückhalterolle (40) aktiv ist, um die Rückhalterolle (40) gegen das kontinuierliche längliche Element (21) zu drücken.

14. Vorrichtung nach Anspruch 11, bei welcher der Förderer (33) ferner eine Lösungseinrichtung (45) aufweist, um das kontinuierliche längliche Element (21) mit dem Förderer (33) außer Eingriff zu bringen.

15. Vorrichtung nach Anspruch 11, bei welcher der Förderer (33) ferner eine Einheit (49) zum Anpassen der Temperatur der Bewegungsoberfläche (34) des Förderers (33) aufweist, um das kontinuierliche längliche Element (21), das auf der Bewegungsoberfläche (21) vorgesehen ist, bei einer vorher festgelegten Temperatur zu halten.

16. Vorrichtung nach Anspruch 11, bei der das nahe gelegene Ende (35) des Förderers (33) zu dem Formungslager (16) hin oder von diesem weg bewegbar ist, um die Position des Förderers (33) an die Volumenausdehnung des Formungslagers (16) anzupassen.

17. Vorrichtung nach Anspruch 11, bei der die wenigstens eine Aufbringeinrichtung (30) wenigstens ein Aufbringelement (31) aufweist, das operativ bezüglich dem Förderer (33) abgestützt ist und das in einer Schubbeziehung zu dem Formungslager (16) hin wirkt.

18. Vorrichtung nach Anspruch 11, bei der die wenigstens eine Zuführeinheit (20) wenigstens einen Extruder (22) aufweist, um das kontinuierliche längliche Element (21) aus Elastomermaterial bereitzustellen.

19. Vorrichtung nach Anspruch 18, bei der die wenigstens eine Zuführeinheit (20) wenigstens eine Einrichtung (27) zum Formgeben für das kontinuierliche längliche Element (21), das aus dem Extruder (22) herauskommt, aufweist, die aus wenigstens einem Paar aus sich gegenläufig drehenden Formgebungsrollen (28) besteht, die mit dem kontinuierlichen länglichen Element (21) in Eingriff treten.

20. Vorrichtung nach Anspruch 19, bei der das Förderband (36) um eine fern gelegene Rolle (37b) gewickelt ist, die nahe an einem fern gelegenen Ende (38) des Förderers (33) entgegengesetzt zu dem nahe gelegenen Ende (35) und benachbart zu der Formgebungseinrichtung (27) angeordnet ist.

21. Vorrichtung nach Anspruch 20, bei der die fern gelegene Rolle (37b) mechanisch mit einer der Formungsrollen (28a) verbunden ist, um eine Bewegung von der Formungsrolle (28a) aufzunehmen.

## Revendications

1. Procédé pour fabriquer un pneumatique (3) comprenant les étapes d'assemblage de composants en matériau élastomère sur un support de formage (16), dans lequel au moins un desdits composants en matériau élastomère est produit par les étapes :
- fournir un élément allongé continu (21) en matériau élastomère sur un convoyeur (33) ; dans lequel le convoyeur (33) comprend une courroie de convoyage (36) ayant une bande (36a) définissant une surface en mouvement (34) ;
- appliquer l'élément allongé continu (21) en forme de bobines enroulées sur le support de formage (16) pour former ledit au moins un composant en matériau élastomère du pneumatique (3) ;
dans lequel l'élément allongé continu (21) est déplacé vers l'avant sur le tronçon (36a) du convoyeur (36) le long d'une direction prédéterminée (X), jusqu'à une extrémité proximale (35) dudit convoyeur (33) proche du support de formage (16) ;
dans lequel le support de formage (16) est en rotation par rapport à l'extrémité proximale (35) du convoyeur (33) pour permettre une application dudit élément allongé continu (21) sur ledit support de formage (16) en forme de bobines enroulées ;
dans lequel, à la fin de l'application, l'élément allongé continu (21) est coupé au moyen d'un dispositif de retenue (39) coopérant avec ledit convoyeur (33) pendant que ledit support de formage (16) est en rotation par rapport à l'extrémité proximale (35) sur le convoyeur (33), pour provoquer un étirement et une rupture de l'élément allongé continu (21) ; dans lequel l'élément allongé continu (21) est en prise avec une surface latérale d'un rouleau libre (48) monté en amont du dispositif de retenue (39) ;
**caractérisé en ce que** ledit rouleau libre (48) fait face à la bande (36a) du convoyeur (36), pour guider l'élément allongé continu (21) sur la courroie de convoyeur (36) et pour garder ledit élément allongé continu (21) en contact avec ladite courroie de convoyeur (36) jusqu'à ce que l'extrémité proximale (35) est atteinte.

2. Procédé selon la revendication 1, dans lequel un freinage de l'élément allongé continu (21) est réalisé par un rouleau de retenue (30) faisant face à la surface en mouvement (34) du convoyeur (33) et ayant une surface latérale (41) amenée en contact avec l'élément allongé continue.

3. Procédé selon la revendication 2, dans lequel le rouleau de retenue (40) est pressé contre l'élément allongé continu (21) par un élément de pression (42).

4. Procédé selon l'une quelconque des revendications 1, 2 ou 3, dans lequel un freinage de l'élément allongé continu (21) est réalisé en arrêtant les surfaces de transport (34) du convoyeur (33).

5. Procédé selon l'une quelconque des revendications 1, 2, ou 3, dans lequel la coupure de l'élément allongé continu (21) est réalisée par le ralentissement de la vitesse de la surface en mouvement (34) du convoyeur (33).

6. Procédé selon l'une quelconque des revendications 1, 2, ou 3, dans lequel un freinage de l'élément allongé continu (21) est réalisé par arrêt de la surface en mouvement (34) du convoyeur (33) et arrêt de la rotation du rouleau de retenue (40).

7. Procédé selon l'une quelconque des revendications 1, 2, ou 3, dans lequel un freinage de l'élément allongé continu (21) est réalisé par ralentissement de la vitesse de la surface en mouvement (34) du convoyeur (33) et ralentissement de la vitesse du rouleau de retenue (40).

8. Procédé selon la revendication 2, dans lequel, lors de l'application, le rouleau de retenue (40) tourne sur l'élément allongé continu (21).

9. Procédé selon la revendication 1, dans lequel, après la rupture de l'élément allongé continu (21), le dispositif de retenue (39) maintient une extrémité d'une longueur dudit élément allongé continu (21) supporté par ledit convoyeur (33).

10. Procédé selon la revendication 1, dans lequel la température de la surface
en mouvement (34) du convoyeur (33) est réglée pour maintenir l'élément allongé continu (21) à une température prédéterminée.

11. Equipement pour fabriquer des pneumatiques, comprenant :
- au moins un support de formage (16) ;
- au moins un dispositif d'assemblage (19) pour assembler des composants en matériau élastomère sur le support de formage (16) ;
dans lequel au moins un dispositif d'assemblage (19) comprend :
- au moins une unité de fourniture (20) fournissant un élément allongé continu (21) en matériau élastomère ;
- au moins un convoyeur (33) pour ledit élément allongé continu (21), ayant une surface en mouvement (34) le long d'une direction prédéterminée (X) et vers une extrémité proximale (35) du convoyeur (33) proche du support de formage (24) ;
dans lequel le convoyeur (33) comprend une courroie de convoyeur (36) ayant une bande (36a) définissant la surface en mouvement (34) ;
- au moins un dispositif (30) pour appliquer ledit élément continu allongé (21) sur ledit support de formage (16), lequel dispositif d'application est positionné à l'extrémité proximale (35) du convoyeur (33) ;
- des dispositifs pour mettre en rotation ledit support de formage (16) sur un axe de celui-ci par rapport à l'extrémité proximale (35) du convoyeur (33) ;
- un dispositif de retenue (39) coopérant avec le convoyeur (33) pour freiner l'élément allongé continu (21) à la fin de l'application ;un rouleau libre (48) monté en amont du dispositif de retenue (39),
- dans lequel ledit rouleau libre (48) fait face à la bande (36a) de la courroie de convoyeur (36) et a une surface latérale en prise avec l'élément allongé continu.

12. Equipement selon la revendication 11, dans lequel le dispositif de retenue (39) comprend un rouleau de retenue (40) faisant face à la surface en mouvement (34) du convoyeur (33) et ayant une surface latérale (41) susceptible d'être en prise avec l'élément allongé continu.

13. Equipement selon la revendication 12, dans lequel le dispositif de retenue (39) comprend en outre un élément de pression (42) opératoirement actif sur le rouleau de retenue (40), pour presser ledit rouleau de retenue (40) contre l'élément allongé continu (21).

14. Equipement selon la revendication 11, dans lequel le convoyeur (33) comprend en outre un dispositif de libération (45) pour désengager l'élément allongé continu (21) dudit convoyeur (33).

15. Equipement selon la revendication 11, dans lequel le convoyeur (33) comprend en outre une unité (49) pour régler la température de la surface en mouvement (34) du convoyeur (33), pour maintenir l'élément allongé continu (21) placé sur ladite surface en mouvement (21) à une température prédéterminée.

16. Equipement selon la revendication 11, dans lequel l'extrémité proximale (35) du convoyeur (33) est approchable ou éloignable du support de formage (16), pour adapter la position du convoyeur (33) à l'encombrement dudit support de formage (16).

17. Equipement selon la revendication 11, dans lequel au moins un dispositif d'application (30) comprenant au moins un organe d'application (31) soutenu en mode opératoire par rapport au convoyeur (33) et agissant en relation de poussée vers le support de formage (16).

18. Equipement selon la revendication 11, dans lequel ladite au moins une unité de fourniture (20) comprend au moins une extrudeuse (22) pour fournir l'élément allongé continu (21) en matériau élastomère.

19. Equipement selon la revendication 18, dans lequel ladite au moins une unité de fourniture (20) comprend au moins un dispositif (27) pour mettre en forme l'élément allongé continu (21) provenant de l'extrudeuse (22), consistant en au moins une paire de rouleaux de mise en forme en contra-rotation (28) mettant en prise l'élément continu allongé (21).

20. Equipement selon la revendication 19, dans lequel la courroie de convoyeur (36) est enroulée sur un rouleau distal (37b) situé à proximité d'une extrémité distale (38) du convoyeur (33) opposée à l'extrémité proximale (35) et adjacente au dispositif de mise en forme (27).

21. Equipement selon la revendication 20, dans lequel le rouleau distal (37b) est relié mécaniquement à l'un des rouleaux de mise en forme (28a) pour recevoir un mouvement dudit rouleau de mise en forme (28a).
